# EUROPÄISCHE PATENTSCHRIFT

(11) **EP 1 400 738 B1**
(45) Veröffentlichungstag und Bekanntmachung des Hinweises auf die Patenterteilung: **17.09.2008**
(21) Anmeldenummer: 03029140.5
(22) Anmeldetag: 04.02.1999
(51) Int. Cl.: F16K 31/02

(54) **Schaltelement, insbesondere Pneumatikventil**
Switch element, in particular a pneumatic valve
Elément de commutation, en particulier une soupape pneumatique

(30) Priorität: 06.02.1998 AT 22098
(43) Veröffentlichungstag der Anmeldung: 24.03.2004
(62) Teilanmeldung aus: 99902449.0
(73) Patentinhaber: Sticht, Walter, A-4800 Attnang-Puchheim (AT)
(72) Erfinder: Sticht, Walter, A-4800 Attnang-Puchheim (AT)
(74) Vertreter: Secklehner, Günter

(56) Entgegenhaltungen:
- DE-A- 3 316 258
- US-A- 4 027 848
- US-A- 4 966 194
- US-A- 5 143 287
- PATENT ABSTRACTS OF JAPAN Bd. 008, Nr. 220 (M-330), 6. Oktober 1984 (1984-10-06) & JP 59 103088 A (KEIICHI YASUKAWA), 14. Juni 1984 (1984-06-14)

## Beschreibung

Die Erfindung betrifft Schaltelemente, wie sie in den Oberbegriffen der Ansprüche 1 und 5. beschrieben sind.

Aus der DE 22 46 624 A ist ein Schaltelement, insbesondere ein Membranventil für die Steuerung von strömenden Medien in Kraftstoffeinspritzanlagen bekannt, das einen mehrteiligen Ventilkörper mit Verteilungskanälen und weiteren Kanälen, beispielsweise Zu- und Abströmkanäle, für das Medium sowie eine zwischen zwei Gehäuseteilen mittels Elektromagneten betätigbare elastisch verstellbare Membran aufweist. Im Ventilkörper sind in Bohrungen Einsätze angeordnet, in denen jeweils der Magnetkern der Elektromagneten angeordnet ist und durch die weiteren Kanäle begrenzt sind. Auf den voneinander abgewandten Seiten der Verteilungskanäle münden die weiteren Kanäle, während auf den einander zugewandten Seiten der Verteilungskanäle Ventilsitze angeordnet sind, die mit der über die Elektromagneten zwischen einer Schließstellung und Öffnungsstellung verstellbaren Membran zusammenwirken. Die Membran weist weiters Durchbrüche zur Mediumleitung auf. Ein sicheres Abdichten eines weiteren Kanals in der Schließstellung der Membran, erfordert ein durch die Elektromagneten erzeugtes Magnetfeld, sodass auch entsprechend leistungsstarke Elektromagneten eingesetzt werden müssen, die nur dadurch bereitgestellt werden können, dass die Windungsanzahl der Elektromagneten und die Stromstärke angehoben wird. Dadurch wird aber nicht nur die Baugröße der Elektromagneten, sondern auch die Gesamtbaugröße des Schaltelementes angehoben.

Die DE 42 20 226 A1 zeigt einen magnetostriktiven Wandler für ein Schaltelement, wobei das Schaltelement aus drei Siliziumplatten aufgebaut ist. Die mittlere Siliziumplatte bildet eine elastisch verstellbare Membran aus. Durch die entsprechenden Strukturen der mittleren bzw. der unteren Siliziumplatte ist der Zuströmkanal des Schaltelementes gebildet. Weiterhin weist die untere Siliziumplatte eine Öffnung, den Abströmkanal und eine diesen umgebenden Ventilsitz auf. Die Membran ist an einer der unteren Siliziumplatte zugewandten Oberseite mit einer magnetostriktiven Schicht zur Relativbewegung derselben gegenüber dem Ventilsitz und an einer der oberen Siliziumplatte zugewandten Oberseite mit einem Dichtblock versehen. An der Außenseite des Ventils außerhalb des vom Druckmittel durchströmten Verteilungskanals ist eine Spule angeordnet, über die ein Magnetfeld erzeugt wird, das ungefähr senkrecht auf die Oberfläche der dünnen magnetostriktiven Schicht steht. Durch dieses Magnetfeld wird ein Zusammenziehen der magnetostriktiven Schicht und somit ein elastisches Strecken der Membran verursacht.

Die EP 0 339 528 A1 beschreibt ein Schaltelement aus mikrostrukturierten Komponenten, die aus einem Grundkörper herausgearbeitet sind. Zur Steuerung der Fluidwege dient eine aus einem Silizium-Grundkörper freigeätzte Membran aus Siliziumoxid. Im Grundkörper sind ein Verteilungs- und ein Sekundärkanal angeordnet. Die Membran ist auf der dem Verteilungskanal abgewandten Oberseite mit Heizelementen, einer piezzoelektrischen Schicht oder Stromleiterbahnen versehen und über welche die Membran zwischen einer den Sekundärkanal abschließenden Schließstellung und einer vom Sekundärkanal abgehobenen Öffnungsstellung bewegbar ausgebildet ist. Die Membran steht dabei unter innerer Druckspannung und wird dadurch die Öffnungsstellung definiert. Durch Beaufschlagung der Membran mit thermischer Energie kann die Membran in ihre Schließstellung verbracht werden.

Ein Schaltelement in Sandwich-Bauweise aus Silizium und einem weiteren Substrat ist aus der EP 0 250 948 A2 bekannt, das einen Ventilkörper mit einem Verteilungskanal und an dessen gegenüberliegenden Enden Öffnungen sowie im Verteilungskanal eine auf elektrostatische Kräfte ansprechende und elastisch dehnbare Membran aufweist. Einer der beiden Öffnungen, ist die diese verschließende oder freigebende Membran zugeordnet. Im Bereich dieser betreffenden Öffnung im Verteilungskanal, ist eine Gegenelektrode zu der Membran angeordnet. Wird eine elektrische Spannung an die Gegenelektrode angelegt, wird zwischen der Membran und der Gegenelektrode ein elektrostatisches Feld erzeugt, sodass die Membran in Richtung auf die Gegenelektrode bewegt wird, sich an diese anlegt und die Öffnung des Verteilungskanals verschließt.

Ein digitales Schaltelement, insbesondere Magnetsteuerventil, ist aus der DE 195 80 307 T1 bekannt, bei dem der Ventilkörper aus zwei Stimteilen und einem Mittelblock mit einem Verteilungskanal zusammengesetzt ist. In den Verteilungskanal münden weitere Kanäle, beispielsweise Zu- und Abströmkanäle, für das Druckmittel. Ein Kolben ist im Verteilungskanal zum Trennen und Verbinden von weiteren Kanälen und dem Verteilungskanal verstellbar angeordnet. Die Verstellung des Kolbens erfolgt durch außerhalb des vom Druckmittel durchströmten Verteilungskanals angeordnete und den einander gegenüberliegenden Stirnenden des Kolbens zugeordnete Elektromagnete. Jeder der Elektromagnete weist eine Spule auf, die um einen Spulenkörper gewickelt ist.

Die DE 15 50 632 A beschreibt ein Schaltelement, insbesondere elektrohydraulisches Mehrwegeventil, für die Ansteuerung von Werkzeugmaschinen. Dabei sind in einem Ventilkörper ein Verteilungskanal und mehrere in den Verteilungskanal mündende weitere Kanäle, beispielsweise Zu- und/oder Abströmkanäle, für das Druckmittel ausgebildet. Im Verteilungskanal ist ein über elektromagnetische Spulen verstellbarer Kolben zum fluidischen Trennen und Verbinden von den weiteren Kanälen und dem Verteilungskanal angeordnet. An den gegenüberliegenden Stirnenden des Kolbens sind je ein Anker befestigt. Die Spulen die zur Verstellung des Kolbens dienen, sind auf an dem Ventilkörper seitlich angebauten Kernen aufgesetzt und außerhalb des vom Druckmittel durchströmten Verteilungskanals angeordnet. Bei Erregung einer der Spulen werden Anker und Kolben an den Kern dieser Spule angezogen. Die magnetische Koerzitivkraft hält den Kolben auch nach Ausschalten des Stromes in seiner Stellung fest. Nachteilig ist neben dem aus einer Vielzahl von Einzelkomponenten bestehenden Aufbau, auch der hohe Anteil an bewegter Masse, wodurch die Schaltzeit derartiger Schaltelemente erhöht wird.

Aufgabe der Erfindung ist es daher, ein aus einer geringen Anzahl von Einzelkomponenten bestehendes Schaltelement zu schaffen, welches geringste Schaltzeiten ermöglicht und mit kleinsten Abmessungen realisiert werden kann.

Die Aufgabe der Erfindung wird durch die im Kennzeichenteil des Anspruches 1 beschriebenen Merkmale gelöst. Die überraschenden Vorteile dabei sind, dass keine zusätzlichen Elemente außerhalb am Schaltelement angebracht werden müssen und durch die Anordnung der Spule in dem vom Druckmittel durchströmten Verteilungskanal benachbart zu einem der in den Verteilungskanal mündenden weiteren Kanäle die Baugröße des kompakt aufgebauten Schaltelementes, insbesondere Pneumatik- und Hydraulikventil, verkleinert sowie die Bewegungsenergie, die Schaltwege und die Schaltzeit desselben reduziert werden, wodurch insbesondere bei automatisierten Fertigungseinrichtungen eine erheblich kürzere Taktzeit und geringere Betriebskosten realisiert werden können. Darüber hinaus ist von Vorteil, dass die Membran in ihrer jeweiligen Schaltstellung eine Über-Totpunkt-Lage einnehmen kann, in der eine selbsttätige Änderung der Schaltstellung verhindert wird. Ebenso wird bei dem Schaltelement gemäß der Erfindung, eine unerwünschte Medienzirkulation zwischen dem Verteilungskanal und den weiteren Kanälen verhindert.

Vorteilhaft ist auch die Ausbildung nach Anspruch 2, da die Schaltzeit weiter reduziert werden kann.

Günstige Weiterbildungen sind in den Ansprüchen 3 und 4 beschrieben, welche eine Verstellung der Membran mit geringem Energieaufwand ermöglichen.

Die Aufgabe der Erfindung wird aber auch durch die im Kennzeichenteil des Anspruches 5 beschriebenen Merkmale gelöst. Der überraschende Vorteil dabei ist, dass der Kolben getrennt von den Spulen angeordnet und deshalb nur eine geringe Masse aufweist, wodurch eine Reduktion der Schaltzeiten, Schaltwege und Bewegungsenergie erreicht wird. Durch die Anordnung der Spulen in dem vom Druckmittel durchströmten Verteilungskanal benachbart zu einem der in den Verteilungskanal mündenden weiteren Kanäle, kann die Baugröße des Schaltelementes verkleinert werden.

Die Weiterbildung nach Anspruch 6 ist von Vorteil, wodurch eine Vielzahl von Schaltmöglichkeiten geschaffen wird, die voneinander unabhängig sind und der Kolben nicht durch Spulen für andere Kolben beeinflusst werden. Ferner kann die Positioniergenauigkeit des relativ zu einem Kanal verstellbaren Kolbens während einer Relativverstellung in seine Endstellungen weiters erhöht werden.

Gemäß Anspruch 7 ist eine Verstellung des Kolbens mit geringem Energieaufwand möglich.

Die Fortbildung nach Anspruch 8 ist von Vorteil, da in einfacher Weise eine Reduzierung des Verschleißes und damit eine Reduzierung von Herstellkosten und Instandhaltungskosten erreicht werden.

Schließlich ist aber auch eine Weiterbildung nach Anspruch 9 von Vorteil, wodurch eine Doppelfunktionalität des Schaltelementes hinsichtlich der Strömungsleitung und einer exakten Positioniermöglichkeit des Kolbens erreicht wird.

Die Erfindung wird nachfolgend anhand der in den Zeichnungen gezeigten Ausführungsbeispiele näher beschrieben.

Es zeigen:
- Fig. 1: eine erste Ausführungsvariante des erfindungsgemäßen Schaltelementes, geschnitten, in der Stirnansicht;
- Fig. 2: eine zweite Ausführungsvariante des erfindungsgemäßen Schaltelementes, geschnitten, in der Stirnansicht;
- Fig. 3: eine dritte Ausführungsvariante des erfindungsgemäßen Schaltelementes, geschnitten, in der Stirnansicht;
- Fig. 4: das Schaltelement, geschnitten gemäß den Linien IV - IV in Fig. 3.

Einführen sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können.

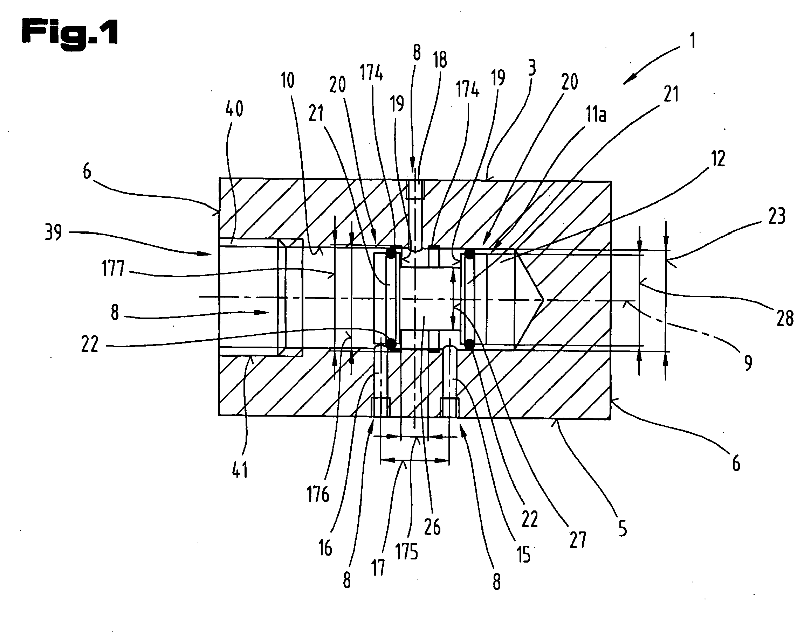

In der Fig. 1 ist ein Schaltelement 1 für Druckmittel, insbesondere ein Pneumatikventil oder Hydraulikventil dargestellt. Dieses ist beispielsweise aus Metall oder Kunststoff aufgebaut und quaderförmig ausgebildet. Es besitzt eine vorzugsweise ebenflächig ausgebildete Oberseite 3, eine parallel zu dieser um eine Höhe beabstandet verlaufende Unterseite 5, sowie rechtwinkelig zu diesen verlaufende Seitenflächen 6, wobei die zwei einander gegenüberliegende und abgewandte Seitenflächen 6 um eine rechtwinkelig zur Höhe gemessene Länge voneinander beabstandet sind. Das Schaltelement 1 besitzt einen Ventilkörper mit mehreren Kanälen 8.

Einer der Kanäle 8 weist eine Führungsvorrichtung 10 für zumindest ein Bewegungselement 11a auf und ist als Verteilungskanal 12 für das Medium ausgebildet. Der Verteilungskanal 12 ist beispielsweise als Sackloch ausgebildet und besitzt in einem der Seitenfläche 6 benachbarten Bereich eine Aufnahme 39 für ein Verschlussstück 40, welches den Verteilungskanal 12 verschließt, insbesondere über einen Gewindeabschnitt 41 in den Ventilkörper eingeschraubt ist.

Die weiteren Kanäle 8 sind als Zuströmkanal 15 und Abströmkanal 16 ausgebildet, welche von der Unterseite 5 in den Verteilungskanal 12 ragen und die voneinander um den Abstand 17 distanziert sind. Von der Oberseite 3 erstreckt sich der Sekundärkanal 18 zum Verteilungskanal 12. Der Sekundärkanal 18 ist beispielsweise über ein Anschlussgewinde und über nicht dargestellte Schlauchverbindungen mit einem nicht dargestellten Zylinder, beispielsweise Pneumatikzylinder verbunden.

Im Verteilungskanal 12 befindet sich das Bewegungselement 11a in Form eines Kolbens, der zwei rechtwinkelig zur Mittelachse 9 verlaufende Bünde 20 besitzt, die jeweils zumindest eine konzentrisch um die Mittelachse 9 umlaufende, nutförmige Vertiefung 21 für Dichtelemente 22 besitzen. Die Bünde 20 sind über das Zwischenstück 26 verbunden und werden durch die einander zugewandten Stirnflächen 19 begrenzt, welche um eine Zwischenstücklänge voneinander distanziert sind. Der Durchmesser 27 des Zwischenstückes 26 ist geringer als der Bunddurchmesser 28 der Bünde 20.

Der Verteilungskanal 12 weist Mittel zur Relativbewegung des Bewegungselementes 11a auf, welche als elektrisch betriebene Spulen 174 ausgebildet sind. Diese sind voneinander um einen parallel zur Mittelachse 9 gemessenen Abstand 175 distanziert. Sie weisen einen rechtwinkelig zur Mittelachse 9 gemessenen Innendurchmesser 176 und einen parallel zu diesem gemessenen Außendurchmesser 177 auf, wobei der Innendurchmesser 176 dem Innendurchmesser 23 des Verteilungskanals 12 entspricht. Der Außendurchmesser 177 ist größer als der Innendurchmesser 176.

Im Bereich des Abstandes 175 befindet sich die Öffnung des Sekundärkanals 18. Soll nun der in Fig. 1 dargestellte Strömungsweg vom Zuströmkanal 15 in den Sekundärkanal 18 dahingehend geändert werden, dass der Sekundärkanal 18 mit dem Abströmkanal 16 in Strömungsverbindung gebracht wird, so wird die dem Abströmkanal 16 benachbarte Spule 174 stromlos geschaltet und die dem Zuströmkanal 15 benachbarte Spule 174 mit Strom beaufschlagt, wodurch nun der dem Zuströmkanal 15 benachbarte Bund 20 in Richtung zum Abströmkanal 16 durch die elektromagnetische Kraft bewegt wird und dadurch das Dichtelement 22, insbesondere Dichtring, in eine zwischen dem Zuströmkanal 15 und dem Sekundärkanal 18 befindliche Stellung gebracht wird, wodurch dieser Strömungsweg versperrt wird und der Strömungsweg vom Sekundärkanal 18 zum Abströmkanal 16 dadurch freigegeben wird, dass der dem Abströmkanal 16 benachbarte Bund 20 bzw. das an diesem angeordnete Dichtelement 22 in eine vom Abströmkanal 16 in entgegengesetzter Richtung zum Zuströmkanal 15 distanzierte Lage gebracht wird.

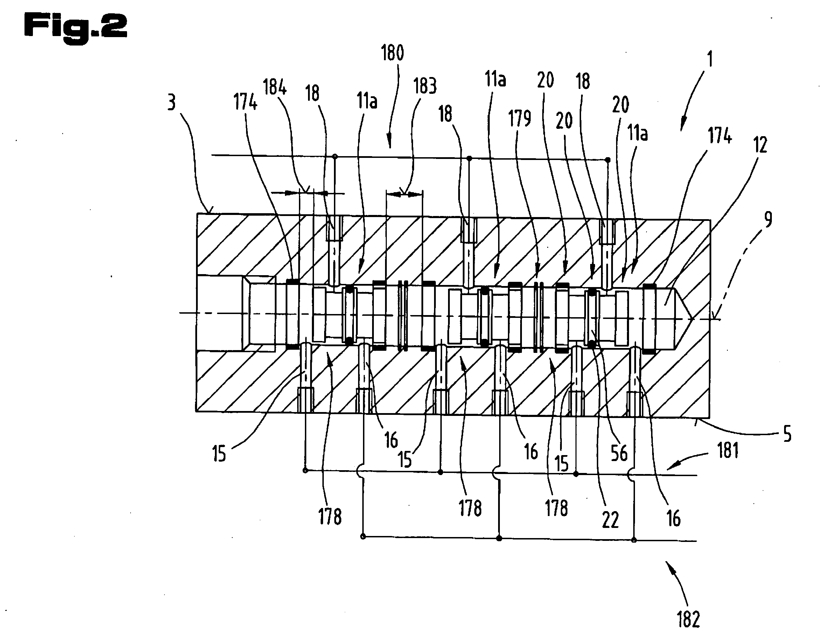

In der Fig. 2 ist eine andere Ausführungsvariante des erfindungsgemäßen Schaltelementes 1 dargestellt. Dieses besitzt mehrere im Verteilungskanal 12 angeordnete kolbenförmige Bewegungselemente 11a, wobei der Verteilungskanal 12 in Verteilungsabschnitte 178 dadurch unterteilt ist, sodass zwischen zwei benachbarten Verteilungsabschnitten 178 ein Dichtungsschot 179 angeordnet ist. Das Bewegungselement 11a besitzt mehrere konzentrisch um die Mittelachse 9 umlaufende Bünde 20, wobei zwei Bünde 20 eine Aufnahmenut 56 für das Dichtelement 22 ausbilden, von denen sich weitere Bünde 20 in einander entgegengesetzter Richtung distanziert befinden.

Im Verteilungskanal 12 angeordnet befinden sich die Mittel zur Relativbewegung, welche als Spulen 174 ausgebildet sind. Jeweils einer von zwei in einem Verteilungsabschnitt 178 angeordneten Spule 174 zugeordnet, ist ein Bund 20 des Bewegungselementes 11a, sodass bei Beaufschlagung einer Spule 174 der dieser zugeordnete Bund 20 in Richtung dieser Spule 174 angezogen wird und somit das Bewegungselement 11a längs der Mittelachse 9 verschoben wird. An der Oberseite 3 sind mehrere Sekundärkanäle 18 angeordnet, welche beispielsweise zu einer gemeinsamen Medienhauptleitung 180 zusammengefasst sind. An der Unterseite 5 befinden sich mehrere Zuströmkanäle 15, welche beispielsweise zu einer gemeinsamen Medienzuströmleitung 181 zusammengefasst sind. Mehrere ebenfalls in der Unterseite 5 angeordnete Abströmkanäle 16 sind ebenfalls zusammengefasst zu einer Medienabströmleitung 182. Dadurch ist es nun möglich, medienbetätigte Abnehmer mit einem größeren Volumen mit Medium zu versorgen und dieses Volumen darüber hinaus zu variieren.

Die Spulen 174 im Verteilungskanal 12 sind so angeordnet, dass jeweils zwei benachbarte Spulen 174 zweier benachbarter Verteilungsabschnitte 178 voneinander um eine Distanz 183 beabstandet sind, die größer ist als ein parallel zu dieser gemessener Abstand 184 einer Spule 174 zu einem dieser zugeordneten, jedoch von dieser beabstandeten Bund 20 eines Bewegungselementes 11a, welches sich in einem Verteilungsabschnitt 178 befindet. Dadurch wird verhindert, dass eine Spule 174 eines Verteilungsabschnittes 178 das Bewegungselement 11a eines benachbarten Verteilungsabschnittes 178 beeinflusst. Das Bewegungselement 11 a kann aus Kunststoff und/oder Metall gebildet sein.

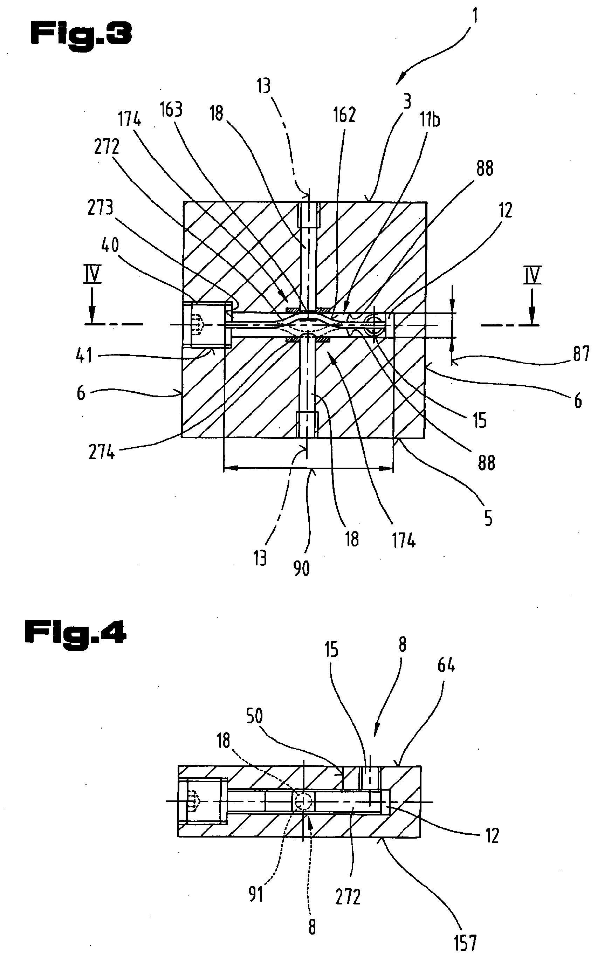

In den Fig. 3 und 4 ist eine andere Ausführungsform des erfindungsgemäßen Schaltelementes 1 gezeigt. Dieses wird durch die Oberseite 3, die Unterseite 5, die Seitenflächen 6, die Rückseite 64 und die Vorderseite 157 begrenzt. Von der Oberseite 3 erstreckt sich in Richtung zur Unterseite 5 ein Sekundärkanal 18 mit einer Bohrungsachse 13, welche beispielsweise fluchtend ist mit einer weiteren Bohrungsachse 13 eines weiteren Sekundärkanals 18, welcher von der Unterseite 5 in Richtung zur Oberseite 3 verläuft. Beide Sekundärkanäle 18 münden in einen Verteilungskanal 12, welcher eine Oberfläche 88 besitzt, die rechtwinkelig zu den Bohrungsachsen 13 und parallel zur Oberseite 3 bzw. Unterseite 5 verläuft. Von dieser in Richtung zur Oberseite 3 um die Känalhöhe 87 distanziert befindet sich eine weitere Oberflächen 88. Von der Rückseite 64 bis zum Verteilungskanal 12 erstreckt sich ein Zuströmkanal 15. Im Verteilungskanal 12 befindet sich ein Bewegungselement 11b, welches als elastisch verformbare Membran 272 ausgebildet ist, das an den den Oberflächen 88 zugewandten Oberseiten 162 beispielsweise Dichtschichten 163 besitzt. Den Oberseiten 162 und Dichtschichten 163 sind die Öffnungen 91 der Sekundärkanäle 18, welche sich im Bereich der Oberflächen 88 befinden, zugeordnet. Die Membran 272 ist dabei mit einem Verschlussstück 40 vorzugsweise bewegungsfest verbunden, welches einen Gewindeabschnitt 41 besitzt, der in einem Innengewinde angeordnet ist. Das Verschlussstück 40 weist weiters eine parallel zur Seitenfläche 6 verlaufende Stirnfläche 273 auf. Die Membran 272 weist eine von der Stirnfläche 273 parallel zur Oberfläche 88 gemessene, gestreckte Länge auf, welche größer ist als die von der Stirnfläche 273 parallel zu dieser gemessene Länge 90 des Verteilungskanals 12.

Im Verteilungskanal 12, insbesondere im Bereich der Oberflächen 88 befinden sich Spulen 174, welche beispielsweise als Flachspulen 274 ausgebildet und den Oberseiten 162 der Membran 272 zugeordnet sind. Die Spulen 174 weisen vorzugsweise im Bereich der Öffnung 91 der Sekundärkanäle 18 ebenfalls Öffnungen 274' auf. Diese weisen Leitungen 50 auf, welche beispielsweise vom Verteilungskanal 12 bis zur Rückseite 64 des Schaltelementes 1 verlaufen. Die Flachspulen 274 besitzen weiters vorzugsweise konzentrisch zu den Bohrungsachsen 13 und zu den Öffnungen 91 verlaufende Öffnungen 274', sodass ein Strömungsweg durch die Flachspulen 274 ermöglicht wird.

Wird nun eine der beiden Flachspulen 274 über die Leitung 50 mit Strom beaufschlagt, so wird die Membran 272 in Richtung zur strombeaufschlagten Flachspule 274 verformt, wobei die Dichtschichte 163 ein Abdichten des jeweiligen Sekundärkanals 18 bewirkt, wodurch das Medium, welches nicht nur auf Luft beschränkt sein muss, vom Zuströmkanal 15 zum anderen Sekundärkanal 18 weitergeleitet wird. Dadurch, dass die gestreckte Länge der Membran 272 größer ist als die Länge 90, ergibt sich aufgrund der Elastizität der Membran 272 eine Kraftkomponente in Richtung der Öffnung 91, an die die Dichtschichte 163 angepresst wird und diese abdichtet. Soll nun die andere Öffnung 91 verschlossen werden, so wird die andere Flachspule 274 kurzzeitig mit einem Strom hoher Stromstärke bzw. Hochspannung beaufschlagt, wodurch eine entgegen der ursprünglichen Kraftkomponente gerichtete Magnetkraft bzw. eine elektrostatische Kraft erzeugt wird, die die Membran 272 in Richtung zur anderen Öffnung 91 bewegt. Da die gestreckte Länge größer ist als die Länge 90, schnappt die Membran 272 nach Überschreiten eines Totpunktes zur anderen Öffnung 91 und dichtet diese mit der Dichtschichte 163 ab. Selbstverständlich ist es, wie bereits erwähnt, möglich, anstelle von Luft auch andere Medien zu steuern.

Die einzelnen dargestellten Varianten und Details können selbstverständlich als standardisierte bzw. genormte Bauelemente ausgebildet sein, welche bauteilartig zu einem modularen Gesamtelement zusammengefügt werden können. Dadurch wird beispielsweise die Möglichkeit geschaffen, Ventilblöcke mit Feldbusanschlüssen herzustellen, wie diese von Pneumatikherstellern zum Zeitpunkt der Anmeldung am Markt angeboten werden. Insbesondere können die Schaltelemente 1 und gegebenenfalls elektrische Steuermodule zum Herstellen der Ventilblöcke durch Verwendung von pneumatischen Verteilerleisten und/oder elektrischen Verteilerschienen, wie dies im Detail in der DE 30 42 205 C3 des selben Anmelders beschrieben ist, gebildet werden.

Der Ordnung halber sei abschließend darauf hingewiesen, dass zum besseren Verständnis des Aufbaus des Schaltelementes 1 dieses bzw. dessen Bestandteile teilweise unmaßstäblich und/oder vergrößert und/oder verkleinert dargestellt wurden.

### Bezugszeichenaufstellung

- 1: Schaltelement
- 3: Oberseite
- 5: Unterseite
- 6: Seitenfläche
- 8: Kanal

- 9: Mittelachse
- 10: Führungsvorrichtung
- 11a, b: Bewegungselement
- 12: Verteilungskanal
- 13: Bohrungsachse

- 15: Zuströmkanal
- 16: Abströmkanal
- 17: Abstand
- 18: Sekundärkanal
- 19: Stirnfläche

- 20: Bund
- 21: Vertiefung
- 22: Dichtelement
- 23: Innendurchmesser
- 26: Zwischenstück

- 27: Durchmesser
- 28: Bunddurchmesser
- 39: Aufnahme
- 40: Verschlussstück
- 41: Gewindeabschnitt

- 50: Leitung
- 56: Aufnahmenut
- 64: Rückseite
- 87: Kanalhöhe
- 88: Oberfläche

- 90: Länge
- 91: Öffnung
- 157: Vorderseite
- 162: Oberseite
- 163: Dichtschichte

- 174: Spule
- 175: Abstand
- 176: Innendurchmesser
- 177: Außendurchmesser
- 178: Verteilungsabschnitt

- 179: Dichtungsschot
- 180: Medienhauptleitung
- 181: Medienzuströmleitung
- 182: Medienabströmleitung
- 183: Distanz

- 184: Abstand
- 272: Membran
- 273: Stirnfläche
- 274: Flachspule
- 274': Öffnung

## Patentansprüche

1. Schaltelement (1) für Druckmittel, insbesondere ein Pneumatikventil oder ein Hydraulikventil, mit einem Ventilkörper mit einem Verteilungskanal (12) und in den Verteilungskanal (12) mündenden weiteren Kanälen (8), beispielsweise Zu- und/oder Abströmkanäle oder Sekundärkanäle (15, 16, 18), für das Druckmittel und mit zumindest einer im Verteilungskanal (12) angeordneten, elastisch verstellbaren Membran (272) zum Trennen und Verbinden von weiteren Kanälen (8) und dem Verteilungskanal (12) und mit zumindest einer im Ventilkörper angeordneten Spule (174) zur Relativbewegung der Membran (272) gegenüber dem Ventilkörper, wobei die zumindest eine Spule (174) getrennt von der zumindest einen Membran (272) angeordnet ist, **dadurch gekennzeichnet, dass** die zumindest eine Spule (174), insbesondere eine Flachspule (274), im Verteilungskanal (12) benachbart zu einem der in den Verteilungskanal (12) mündenden weiteren Kanäle (8) angeordnet ist und dass die Membran (272) eine gestreckte Länge aufweist, die größer ist als die Länge (90) des Verteilungskanals (12).

2. Schaltelement nach Anspruch 1, **dadurch gekennzeichnet, dass** mehrere Spulen (174) im Verteilungskanal (12) jeweils benachbart zu einem der in den Verteilungskanal (12) mündenden weiteren Kanäle (8) angeordnet sind, wobei je eine Spule (174) zur Relativbewegung der Membran (272) je einer Oberseite (162) der Membran (272) zugeordnet ist.

3. Schaltelement nach Anspruch 2, **dadurch gekennzeichnet, dass** die Spulen (174) einander gegenüberliegend in die Oberfläche (88) des Verteilungskanals (12) integriert sind und deren Öffnungen (274`) mit den Öffnungen (91) der weiteren Kanäle (8) zusammenfallen.

4. Schaltelement nach Anspruch 1, **dadurch gekennzeichnet, dass** die Spulen (174) kurzzeitig mit einem Strom hoher Stromstärke bzw. Spannung beaufschlagbar sind.

5. Schaltelement (1) für Druckmittel, insbesondere ein Pneumatikventil oder ein Hydraulikventil, mit einem Ventilkörper mit einem Verteilungskanal (12) und in den Verteilungskanal (12) mündenden weiteren Kanälen (8), beispielsweise Zu- und/oder Abströmkanäle oder Sekundärkanäle (15, 16, 18), für das Druckmittel und mit zumindest einem im Verteilungskanal (12) mittels zumindest einer Spule (174) verstellbaren Kolben (11a) zum Trennen und Verbinden von weiteren Kanälen (8) und dem Verteilungskanal (12) , wobei die zumindest eine Spule (174) getrennt vom zumindest einen Kolben angeordnet ist, **dadurch gekennzeichnet, dass** mehrere Spulen (174) im Verteilungskanal (12) jeweils benachbart zu einem der in den Verteilungskanal (12) mündenden weiteren Kanäle (8) angeordnet sind und je eine Spule (174) zur Relativbewegung des Kolbens (11a) den stirnseitigen Bünden (20) des Kolbens zugeordnet ist.

6. Schaltelement nach Anspruch 5, **dadurch gekennzeichnet, dass** der Verteilungskanal (12) durch zumindest ein Dichtungsschot (179) in mehrere Verteilungsabschnitte (178) unterteilt ist und jeder Verteilungsabschnitt (178) zumindest eine Spule (174) und einen Kolben aufweist und dass eine Distanz (183) zwischen jeweils zwei benachbarten Spulen (174) zweier Verteilungsabschnitte (178) größer ist als ein Abstand (184) einer Spule (174) zu dem dieser zugeordneten Bund (20) des Kolbens.

7. Schaltelement nach Anspruch 5, **dadurch gekennzeichnet, dass** die Spulen (174) kurzzeitig mit einem Strom hoher Stromstärke bzw. Spannung beaufschlagbar sind.

8. Schaltelement nach Anspruch 5, **dadurch gekennzeichnet, dass** der Kolben aus Kunststoff und Metall oder ausschließlich aus Kunststoff besteht.

9. Schaltelement nach Anspruch 5, **dadurch gekennzeichnet, dass** der Verteilungskanal (12) eine Führungsvorrichtung (10) für den Kolben aufweist bzw. ausbildet.

## Claims

1. Switch element (1) for a pressurising medium, in particular a pneumatic valve or a hydraulic valve, with a valve body with a distribution passage (12) and other passages (8) opening into the distribution passage (12) for the pressurising medium, for example inlet and/or outlet passages or secondary passages (15, 16, 18), and with at least one elastically displaceable membrane (272) disposed in the distribution passage (12) for separating and connecting other passages (8) and the distribution passage (12), and with at least one coil (174) disposed in the valve body in order to move the membrane (272) relative to the valve body, and the at least one coil (174) is disposed separately from the at least one membrane (272), **characterised in that** the at least one coil (174), in particular a pancake coil (274), is disposed in the distribution passage (12) adjacent to one of the other passages (8) opening into the distribution passage (12), and the membrane (272) has an extended length which is longer than the length (90) of the distribution passage (12).

2. Switch element as claimed in claim 1, **characterised in that** several coils (174) are disposed in the distribution passage (12), each adjacent to one of the other passages (8) opening into the distribution passage (12), and a coil (174) co-operates respectively with a respective top face (162) of the membrane (272) in order to cause a relative movement of the membrane (272).

3. Switch element as claimed in claim 2, **characterised in that** the coils (174) are integrated in the surface (88) of the distribution passage (12) lying opposite one another and their openings (274') coincide with the openings (91) of the other passages (8).

4. Switch element as claimed in claim 1, **characterised in that** the coils (174) can be briefly supplied with a current of a high current intensity or voltage.

5. Switch element (1) for pressurising medium, in particular a pneumatic valve or a hydraulic valve, with a valve body with a distribution passage (12) and other passages (8) opening into the distribution passage (12) for the pressurising medium, for example inlet and/or outlet passages or secondary passages (15, 16, 18), and with at least one piston (11a) displaceable in the distribution passage (12) by means of at least one coil (174) for separating and connecting other passages (8) and the distribution passage (12), and the at least one coil (174) is disposed separately from the at least one piston, **characterised in that** several coils (174) are disposed in the distribution passage (12) each adjacent to one of the other passages (8) opening into the distribution passage (12), and a coil (174) co-operates respectively with terminal collars (20) of the piston in order to cause a relative movement of the piston (11a).

6. Switch element as claimed in claim 5, **characterised in that** the distribution passage (12) is sub-divided into several distribution sections (178) by means of at least one sealing cam (179), and every distribution section (178) has at least one coil (174) and a piston, and a distance (183) between every two adjacent coils (174) of two distribution sections (178) is greater than a distance (184) of a coil (174) from the collar (20) of the piston co-operating with it.

7. Switch element as claimed in claim 5, **characterised in that** the coils (174) can be briefly supplied with a current of a high current intensity or voltage.

8. Switch element as claimed in claim 5, **characterised in that** the piston is made from plastic and metal or exclusively from plastic.

9. Switch element as claimed in claim 5, **characterised in that** the distribution passage (12) has or acts as a guide mechanism (10) for the piston.

## Revendications

1. Élément de commande (1) pour un fluide sous pression, en particulier une vanne pneumatique ou une vanne hydraulique, comportant un corps de vanne avec un canal de distribution (12) et d'autres canaux (8) pour le fluide sous pression, tels que des canaux d'admission et/ou des canaux d'évacuation ou des canaux secondaires (15, 16, 18), débouchant dans le canal de distribution (12), et avec au moins une membrane (272) élastiquement mobile, disposée dans le canal de distribution (12) en vue de séparer et relier d'autres canaux (8) et le canal de distribution (12), et comportant au moins une bobine (174), disposée dans le corps de vanne, pour le mouvement relatif de la membrane (272) par rapport au corps de vanne, ladite au moins une bobine (174) étant disposée en étant séparée de ladite au moins une membrane (272), **caractérisé en ce que** ladite au moins une bobine (174), en particulier une bobine plate (274), est disposée dans le canal de distribution (12) à proximité de l'un des autres canaux (8) débouchant dans le canal de distribution (12), et **en ce que** la membrane (272) a une longueur développée qui est supérieure à la longueur (90) du canal de distribution (12).

2. Élément de commande selon la revendication 1, **caractérisé en ce que** plusieurs bobines (174) sont disposées dans le canal de distribution (12), chacune à proximité de l'un des autres canaux (8) débouchant dans le canal de distribution (12), chaque bobine (174) pour le mouvement relatif de la membrane (272) étant associée à respectivement une face supérieure (162) de la membrane (272).

3. Élément de commande selon la revendication 2, **caractérisé en ce que** les bobines (174) sont intégrées dans la surface (88) du canal de distribution (12) en étant situées face à face, et leurs ouvertures (274') coïncident avec les ouvertures (91) des autres canaux (8).

4. Élément de commande selon la revendication 1, **caractérisé en ce que** les bobines (174) peuvent être sollicitées pendant un court laps de temps avec un courant avec une intensité ou tension élevée.

5. Élément de commande (1) pour un fluide sous pression, en particulier une vanne pneumatique ou une vanne hydraulique, comportant un corps de vanne avec un canal de distribution (12) et d'autres canaux (8) pour le fluide sous pression, tels que des canaux d'admission et/ou des canaux d'évacuation ou des canaux secondaires (15, 16, 18), débouchant dans le canal de distribution (12), et avec au moins un piston (11a), qui peut être déplacé dans le canal de distribution (12) par au moins une bobine (174) en vue de séparer et relier d'autres canaux (8) et le canal de distribution (12), ladite au moins une bobine (174) étant disposée en étant séparée dudit au moins un piston (11a), **caractérisé en ce que** plusieurs bobines (174) sont disposées dans le canal de distribution (12), chacune à proximité de l'un des autres canaux (8) débouchant dans le canal de distribution (12), et chaque bobine (174) pour le mouvement relatif du piston (11a) est associée aux collets (20) frontaux du piston.

6. Élément de commande selon la revendication 5, **caractérisé en ce que** le canal de distribution (12) est séparé en plusieurs tronçons de distribution (178) par au moins une cloison étanche (179), et chaque tronçon de distribution (178) comporte au moins une bobine (174) et un piston, et **en ce qu'**une distance (183) entre respectivement deux bobines (174) adjacentes de deux tronçons de distribution (178) est supérieure à une distance (184) entre une bobine (174) et le collet (20) du piston, associé à celle-ci.

7. Élément de commande selon la revendication 5, **caractérisé en ce que** les bobines (174) peuvent être sollicitées pendant un court laps de temps avec un courant avec une intensité ou tension élevée.

8. Élément de commande selon la revendication 5, **caractérisé en ce que** le piston est réalisé en matière plastique et en métal ou exclusivement en matière plastique.

9. Élément de commande selon la revendication 5, **caractérisé en ce que** le canal de distribution (12) comporte ou forme un dispositif de guidage (10) pour le piston.
